# EUROPÄISCHE PATENTSCHRIFT

(11) **EP 1 800 834 B1**
(45) Veröffentlichungstag und Bekanntmachung des Hinweises auf die Patenterteilung: **14.09.2011**
(21) Anmeldenummer: 06026511.3
(22) Anmeldetag: 21.12.2006
(51) Int. Cl.: B29C 51/02, B29C 51/42, B29C 45/00

(54) **Verfahren zum Umformen von Formteilen**
Method for re-shaping moulded parts
Procédé destiné à reformer des pièces moulées

(30) Priorität: 21.12.2005 DE 102005061689
(43) Veröffentlichungstag der Anmeldung: 27.06.2007
(73) Patentinhaber: PEGUFORM GMBH, 79268 Bötzingen (DE)
(72) Erfinder: Henninger, Joachim, 79341 Kenzingen (DE); Hiss, Markus, 79241 Ihringen (DE); Zimmer, Wolfgang, 79369 Wyhl (DE)
(74) Vertreter: Neunert, Peter Andreas

(56) Entgegenhaltungen:
- EP-A2- 0 737 556
- WO-A-01/21382
- WO-A-01/39949
- WO-A-02/14051
- DE-U1-202005 010 218

## Beschreibung

Die vorliegende Erfindung betrifft ein Verfahren zum Umformen von Formteilen, insbesondere Bauteilen aus thermoplastischem Kunststoff.

Zur Herstellung von Formteilen aus thermoplastischen Kunststoffen wird häufig das sogenannte Spritzgießen eingesetzt. Mit diesem Verfahren lassen sich auf wirtschaftliche Weise direkt verwendbare Formteile mit großer Stückzahl herstellen. Dazu wird mit einer Spritzgießmaschine der jeweilige Werkstoff verflüssigt und in ein Werkzeug eingespritzt. Der Hohlraum des Werkzeuges, die Kavität, bestimmt die Form und Oberflächenstruktur des fertigen Bauteiles. Mit dieser Technik lassen sich Gegenstände mit hoher Genauigkeit in kurzer Zeit herstellen, wobei die Oberfläche des Bauteiles nahezu frei gewählt werden kann. Ein Verfahren zur Herstellung von Kunststoff-Formteilen mit dekorativ geprägter Oberfläche wird beispielsweise in der DE 37 42 457 A1 beschrieben.

Ein Nachteil des Spritzgussverfahrens ist, dass es nur für größere Stückzahlen wirtschaftlich sinnvoll eingesetzt werden kann, da die Kosten für das Werkzeug in der Regel bereits hohe Investitionen erfordern und selbst bei einfachen Werkzeugen die Schwelle zur Wirtschaftlichkeit erst bei relativ großen Stückzahlen erreicht wird.

So wird auch bei der Fertigung von Formteilen für die Automobilindustrie allgemein eine Erhöhung der Stückzahlen pro Bauteil angestrebt. Kontraproduktiv wirkt sich hier die Vielzahl der Modellvarianten aus. So werden häufig für im wesentlichen gleiche Formteile unterschiedliche Einbauten vorgesehen, die entsprechende Veränderungen am Formteil erfordern. Bisher ist es allgemein üblich, entsprechende Formteiländerungen dadurch zu realisieren, dass man beispielsweise unterschiedliche Spritzgusswerkzeuge einsetzt, was entsprechend hohe Investitionen erfordert.

Alternativ hat man versucht, kleinere Modelländerungen beispielsweise durch den Einsatz von Wechseleinsätzen, die in das ursprüngliche Werkzeug eingesetzt werden und so eine Veränderung des Formteils bewirken, durchzuführen. In diesem Fall ist man jedoch auf sehr einfache Geometrien beschränkt und auf Bereiche des Werkzeuges, die leicht zugänglich sind. Bei komplizierteren Werkzeugen ist der Einsatz von Wechseleinsätzen nicht oder nur unter Einsatz eines unverhältnismäßig hohen Aufwandes möglich.

Die DE 20 2005 010 218 betrifft ein Verfahren gemäß dem Oberbegriff des Anspruchs 1. In dem Dokument wird eine spritzgegossene Griffmulde eines Haltegriffs nach partiellem Erwärmen blasgeformt. Für größere Formteile ist das Verfahren nicht geeignet.

Es besteht somit weiterhin das Bestreben, auf einfache Weise die Stückzahlen pro Werkzeug zu erhöhen und so zu einer höheren Wirtschaftlichkeit zu kommen; ohne dabei auf zusätzliche Variationsmöglichkeiten zu verzichten.

Gelöst wird diese Aufgabe durch ein Verfahren mit den Merkmalen des Anspruchs 1. Vorteilhafte Ausführungsformen und Weiterbildungen des Erfindungsgedankens sind in den Unteransprüchen wiedergegeben. Ein Fahrzeugteil zeigen die Ansprüche 9 und 10.

Im Gegensatz zu den bisherigen Versuchen, durch Manipulation am Gießwerkzeug die Stückzahl pro Werkzeug zu erhöhen, bleibt das Werkzeug beim erfindungsgemäβen Lösungsansatz unverändert.

Dabei wird das Werkzeug so gestaltet, dass das damit hergestellte Formteil als Rohling für eine Vielzahl von Varianten eingesetzt werden kann und nur noch in partiellen Bereichen durch entsprechende Maßnahmen der endgültigen Form angepasst werden muss. Diese Anpassung geschieht dann durch Erwärmen und anschließendes Umformen des Formteils in den betreffenden Bereichen. Für die Erwärmung des partiellen Bereiches können ein oder mehrere Infrarotstrahler eingesetzt werden, prinzipiell kann die Erwärmung jedoch mit jedem anderen üblichen Heizgerät erfolgen.

Die Erwärmung kann dabei sowohl auf der Rückseite als auch auf der Vorderseite erfolgen. Ebenso ist es jedoch auch möglich, das Formteil auf beiden Seiten gleichzeitig zu erwärmen.

Das oben beschriebene Verfahren ist besonders geeignet für Bauteile aus thermoplastischen Kunststoffen, insbesondere teilkristalline und amorphe Kunststoffe sowie Polymerblends.

Die Formteile aus diesen Kunststoffen werden in dem umzuformenden Bereich bis zur Erweichungstemperatur des thermoplastischen Kunststoffes erwärmt und anschließend mit Hilfe einer Matrize und eines Gegenstempels umgeformt. Eine vorteilhafte Ausführungsform sieht vor, dass die Erwärmung auf der Rückseite des Formteils erfolgt, so dass möglicherweise vorhandene Narbstrukturen oder Dekorfolien auf der Vorderseite bei diesem Verfahrensschritt nicht beschädigt werden.

Beim Umformen wird die Matrize auf das erwärmte Formteil gefahren und die gewünschte Umformung wird mit dem Gegenstempel erzeugt.

Das oben beschriebene Verfahren kann vorteilhaft für das Umformen von spritzgegossenen, folienkaschierten Formteilen eingesetzt werden, insbesondere für Innenverkleidungen von Kraftfahrzeugen. Mit Hilfe des erfiridungsgemäßen Verfahrens gelingt es, die Bauteile für den Einbau von Schaltelementen, Leuchten, Griffen oder anderen funktionellen Elementen vorzubereiten, sodass diese funktionellen Teile je nach Bedarf bündig, vertieft oder erhaben zur Bauteiloberfläche angebaut werden können.

Bei einer vorteilhaften Ausführungsform des erfindungsgemäßen Verfahrens wird die Oberfläche mit einer Schutzfolie abgedeckt, um eine StrahLungsüberhitzung der Oberfläche, mechanische Beschädigungen beim Umformen oder Verschmutzungen der Oberfläche zu vermeiden. Dazu wird das Formteil auf der Sichtseite vor dem Aufheizen mit einer Schutzfolie überzogen, die nach dem Umformprozess wieder abgenommen werden kann. Dies empfiehlt sich insbesondere bei empfindlichen Oberflächenmaterialien.

Helle Formteile absorbieren die Wärme häufig nur unzureichend, so dass der Umformprozess erschwert und verzögert wird. In diesem Fall können Verbesserungen dadurch erzielt werden, dass dunkle Deckfolien als Wärmeabsorber insbesondere auf der Rückseite des Formteils aufgebracht werden und für eine ausreichend schnelle und gute Wärmeübertragung sorgen.

Wie bereits erwähnt, wird die Umformung der Formteile vor allem deshalb vorgenommen, um die Formteile für den Einbau von Schaltelementen, Leuchten, Griffen oder anderen funktionellen Elementen vorzubereiten. Die Funktionsweise dieser Elemente sind entweder mechanisch oder elektrisch und erfordern eine entsprechende Verbindung zu den betreffenden Teilen des Kraftfahrzeugs, die manipuliert werden sollen. Das heißt, es müssen entsprechende elektrische Leitungen oder mechanische Verbindungen zu dem Funktionselement im Bauteil hergestellt werden.

Dafür werden Stanzungen vorgenommen, um Zugänge für Kabel oder mechanische Verbindungen zu schaffen. Eine vorteilhafte Ausführungsform des erfindungsgemäßen Verfahrens sieht daher vor, das Umformen mit dem Stanzen zu kombinieren und in der gleichen Vorrichtung neben dem Umformen auch die erforderlichen Stanzungen durchzuführen.

Ein zusätzlicher Vorteil des erfindungsgemäßen Verfahrens ist darin zu sehen, dass die Lagerhaltung des Produzenten von Formteilen reduziert werden kann. Anstatt zahlreiche Varianten auf Abruf lagern zu müssen, kann der Hersteller von Formteilen ausgehend von dem oben beschriebenen Formteilrohling bei Kundenabruf die gewünschte Variante durch das erfindungsgemäße Umformungsverfahren erzeugen.

Im Folgenden wird die Erfindung anhand von Zeichnungen ausführlich erläutert. Dabei zeigen;
- Figur 1: eine schematische Darstellung 1 des Umformvertahrens während der Aufheizphase,
- Figur 2: eine schematische Darstellung des Umformverfahrens nach der Aufheizphase und vor dem Umformvorgang,
- Figur 3: eine schematische Darstellung des Umformverfahrens nach dem Umformen,
- Figur 4: eine schematische Darstellung des Umformverfahrens am Beispiel eines folienkaschierten Formteils und
- Figur 5: umgeformtes folienkaschiertes Formteil.

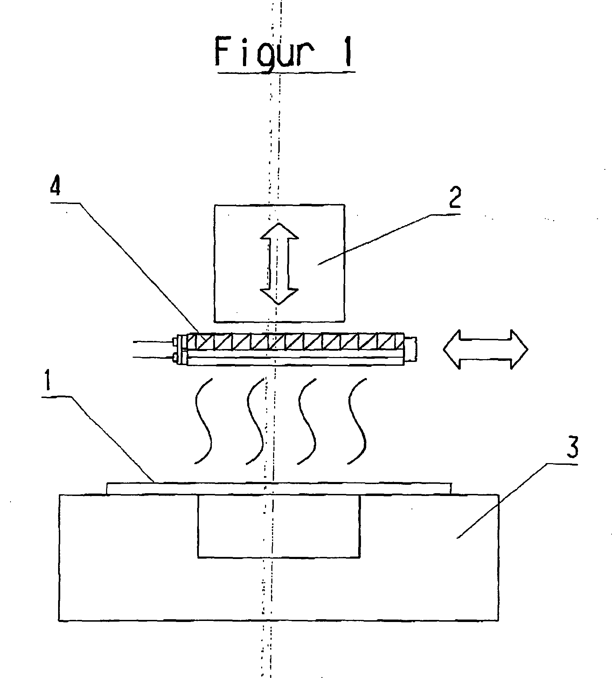

In den Figuren 1 bis 3 sind die einzelnen Schritte des erfindungsgemäßen Verfahrens wiedergegeben. Dabei zeigt die Figur 1 den Aufheizschritt, bei dem das vorgefertigte Formteil 1 bereits mit der Matrize 3 zusammengeführt wurde und das Formteil 1 mit Hilfe einer Heizeinrichtung 4 erwärmt wird. Der Gegenstempel 2 befindet sich in seiner Ausgangsstellung oberhalb der Heizeinrichtung 4. Als Heizeinrichtung 4 kann jede beliebige Heizquelle eingesetzt werden. Vorteilhaft werden bei dem erfindungsgemäßen Verfahren ein oder mehrere Infrarotstrahler eingesetzt. Das Formteil 1 wird vorzugsweise bei diesem Aufheizschritt auf seiner Rückseite erwärmt.

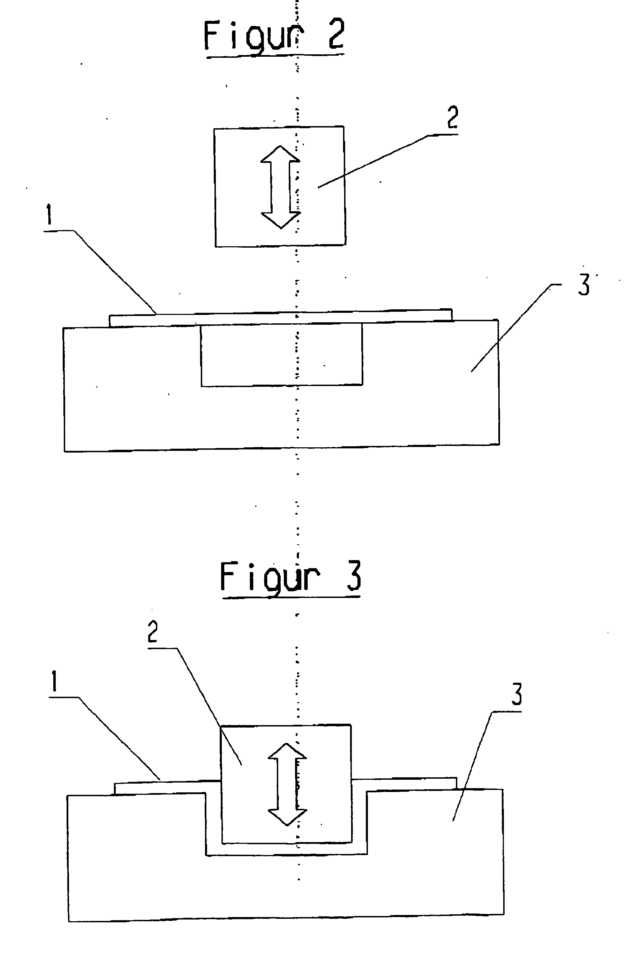

In der Figur 2 ist die Phase wiedergegeben, in der der Kunststoff des Formteils 1 seinen Erweichungspunkt erreicht hat. Die Heizeinrichtung 4 wurde entfernt und der Gegenstempel 2 wird in Richtung Formteil 1 und Matrize 3 verfahren.

In der Figur 3 ist der Umformvorgang abgeschlossen und der Prägestempel 2 hat seine Endposition in der korrespondierenden Ausbuchtung der Matrize 3 eingenommen. Die Umformung des Formteils 1 ist damit beendet.

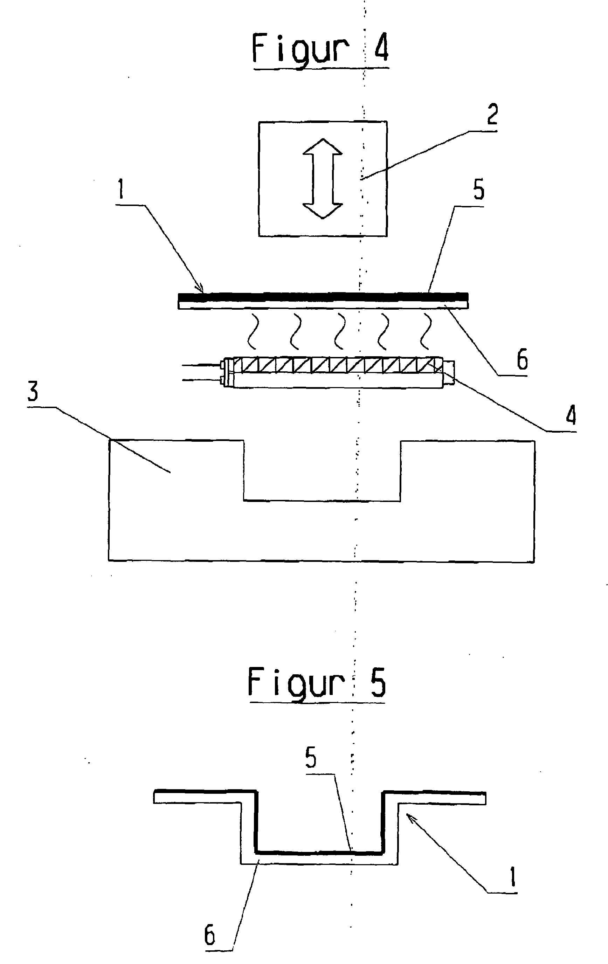

In der Abbildung 4 ist der Umformvorgang am Beispiel eines folienkaschierten Formteils 1 dargestellt. In diesem Fall wird das Formteil von der Unterseite her im Bereich der Hinterfüllung 6 aus thermoplastischem Kunststoff erwärmt. Sobald der Erweichungspunkt des thermoplastischen Kunststoffes erreicht ist, wird die Heizeinrichtung 4 entfernt, das Formteil 1 wird mit der Matrize zusammengeführt 3 und anschließend umgeformt.

In der Abbildung 5 ist ein umgeformtes folienkaschiertes Formteil 1 zu sehen, das nach dem oben geschilderten Verfahren hergestellt wurde.

Mit Hilfe des erfindungsgemäßen Verfahrens können so auf einfache Weise vorgefertigte Formteile individuell gestaltet werden. So gelingt es beispielsweise, ausgehend von einem Formteil als Grundtyp verschiedene Ausstattungsvarianten für Fahrzeugbauteile herzustellen, ohne dass unterschiedliche Spritzgusswerkzeuge oder Wechseleinsätze eingesetzt werden müssen. So kann die Variantenzahl in der Lagerhaltung reduziert werden und aufwändige Umrüstzeiten eingespart werden. Die gewünschte Variante wird erst bei Kundenabruf erzeugt.

Besonders geeignet ist das erfindungsgemäße Verfahren für das Umformen von spritzgegossenen, folienkaschierten Formteilen als Vorbereitung für den Einbau von Schaltelementen, Leuchten oder anderen Funktionselementen, die je nach Bedarf bündig, vertieft oder erhaben zur Bauteiloberfläche eingebaut werden sollen.

### Bezugszeichenliste

- 1: Formteil
- 2: Gegenstempel
- 3: Matrize
- 4: Heizeinrichtung
- 5: Folie
- 6: Hinterfüllung aus thermoplastischem Kunststoff

## Patentansprüche

1. Verfahren zum Umformen von Formteilen (1) aus thermoplastischen Kunststoffen für den Einsatz als Bauteil für Kraftfahrzeuge, wobei vorgefertigte Formteile (1) partiell in dem umzuformenden Bereich mit Hilfe einer Heizeinrichtung (4) bis zu einer für den jeweiligen Kunststoff geeigneten Umformtemperatur erwärmt werden und anschließend mit einem Umformwerkzeug (2, 3) in dem partiellen Bereich die gewünschte Umformung durchgeführt wird, **dadurch gekennzeichnet, dass** die vorgefertigten Formteile (1) als Grundtyp für verschiedene Ausstattungsvarianten von Fahrzeugbauteilen vorgesehen sind und das Umformen mit Hilfe einer Matrize (3) und eines Stempels (2) erfolgt, wobei die Matrize (3) auf das erwärmte Formteil (1) gefahren und die gewünschte Umformung mit dem Stempel (2) erzeugt wird.

2. Verfahren nach Anspruch 1, **dadurch gekennzeichnet, dass** die Formteile (1) durch Spritzgießen erhalten werden.

3. Verfahren nach Anspruch 1 oder 2, **dadurch gekennzeichnet, dass** die Formteile (1) mit einem dekorativen Oberflächenmaterial versehen sind.

4. Verfahren nach einem der Ansprüche 1 bis 3, **dadurch gekennzeichnet, dass** die Erwärmung des Formteils (1) mit Hilfe eines oder mehrerer Infrarotstrahlern (4) erfolgt.

5. Verfahren nach einem der Ansprüche 1 bis 4, **dadurch gekennzeichnet, dass** als Ausgangsmaterial für den thermoplastischen Kunststoff teilkristalline und amorphe Kunststoffe sowie Polymerblends eingesetzt werden.

6. Verfahren nach einem der Ansprüche 1 bis 5, **dadurch gekennzeichnet, dass** die Oberfläche, insbesondere auf der Sichtseite, vor dem Aufheizen mit einer Schutzfolie zum Schutz gegen Strahlungsüberhitzung, mechanische Beschädigung beim Umformen oder Verschmutzung abgedeckt wird.

7. Verfahren nach einem der Ansprüche 1 bis 6, **dadurch gekennzeichnet, dass** die Formteile (1), insbesondere helle Formteile (1), vor dem Aufheizen mit einer Deckfolie, insbesondere mit einer dunklen wärmeabsorbierenden Folie, versehen werden.

8. Verfahren nach einem der Ansprüche 1 bis 7, **dadurch gekennzeichnet, dass** gleichzeitig mit dem Umformen im Umformwerkzeug (2, 3) Zugänge für elektrische Leitungen oder mechanische Verbindungen in das Formteil (1) gestanzt werden.

9. Fahrzeugbauteil, hergestellt nach einem Verfahren gemäß einem der Ansprüche 1 bis 8, für den Einsatz als Innenverkleidung von Kraftfahrzeugen.

10. Fahrzeugbauteil nach Anspruch 9, **dadurch gekennzeichnet, dass** in den durch Umformung erzeugten Vertiefungen Einbauteile in Form von Schaltern, Leuchten oder anderen funktionellen Teile bündig, vertieft oder erhaben zur Bauteiloberfläche eingefügt sind.

## Claims

1. A method of shaping moulded parts (1) of thermoplastic plastics materials for use as a component for motor vehicles, wherein prefabricated moulded parts (1) are heated in part in the region to be shaped up to a shaping temperature suitable for the respective plastics material with the aid of a heating device (4) and after that the desired shaping is carried out with a shaping tool (2, 3) in the partial region, **characterized in that** the prefabricated moulded parts (1) are provided as a basic type for different equipping variants of vehicle components, and the shaping is carried out with the aid of a die (3) and a ram (2), wherein the die (3) is moved to the heated moulded part (1) and the desired shaping is produced by the ram (2).

2. A method according to claim 1, **characterized in that** the moulded parts (1) are obtained by injection moulding.

3. A method according to claim 1 or 2, **characterized in that** the moulded parts (1) are provided with a decorative surface material.

4. A method according to any one of claims 1 to 3, **characterized in that** the heating of the moulded part (1) is carried out with the aid of one or more infrared emitters (4).

5. A method according to any one of claims 1 to 4, **characterized in that** partially crystalline and amorphous plastics materials as well as polymer blends are used as the starting material for the thermoplastic plastics material.

6. A method according to any one of claims 1 to 5, **characterized in that** the surface, in particular on the visible side, is covered before the heating with a protective film for protection against overheating by radiation, mechanical damage during the shaping or soiling.

7. A method according to any one of claims 1 to 6, **characterized in that** the moulded parts (1), in particular bright moulded parts (1), are provided before the heating with a covering film, in particular with a dark, heat-absorbing film.

8. A method according to any one of claims 1 to 7, **characterized in that** entries for electrical lines or mechanical connections are stamped in the moulded part (1) at the same time as the shaping in the shaping tool (2, 3).

9. A vehicle component, produced in accordance with a method according to any one of claims 1 to 8, for use as an inner lining of motor vehicles.

10. A vehicle component according to claim 9, **characterized in that** fitted parts in the form of switches, lights or other functional parts are inserted - in a manner flush, recessed or raised with respect to the surface of the component - in the recesses produced by shaping.

## Revendications

1. Procédé de transformation de pièces moulées (1) en matière thermoplastique pour servir de pièces destinées à des véhicules automobiles, selon lequel
- on chauffe les pièces moulées préfabriquées (1), partiellement dans la zone à transformer à l'aide d'une installation de chauffage (4) jusqu'à une température de transformation adaptée à la matière plastique respective et ensuite, on effectue la transformation souhaitée dans la zone partielle à l'aide d'un outil de transformation (2, 3),
procédé **caractérisé en ce que**
- les pièces moulées préfabriquées (1) correspondent à un type de base pour différentes variantes d'équipements de pièces de véhicules automobiles, et
- la transformation se fait à l'aide d'une matrice (3) et d'un poinçon (2), * la matrice (3) étant conduite contre la pièce moulée réchauffée (1) pour réaliser la transformation souhaitée avec le poinçon (2).

2. Procédé selon la revendication 1,
**caractérisé en ce qu'**
les pièces moulées (1) sont réalisées par injection.

3. Procédé selon la revendication 1 ou 2,
**caractérisé en ce que**
les pièces moulées (1) sont munies d'une matière décorative de surface.

4. Procédé selon l'une des revendications 1 à 3,
**caractérisé en ce qu'**
on chauffe la pièce moulée (1) à l'aide d'un ou plusieurs radiateurs infrarouge (4).

5. Procédé selon l'une des revendications 1 à 4,
**caractérisé en ce que**
la matière de départ pour la matière thermoplastique, est une matière plastique amorphe et partiellement cristalline, ainsi que des mélanges de polymères.

6. Procédé selon l'une des revendications 1 à 5,
**caractérisé en ce qu'**
on couvre la surface, notamment du côté visible avant de chauffer, à l'aide d'un film protecteur pour protéger contre la surchauffe par le rayonnement, les dommages mécaniques lors de la transformation ou les salissures.

7. Procédé selon l'une des revendications 1 à 6,
**caractérisé en ce qu'**
avant de chauffer, on munit les pièces moulées (1) notamment les pièces moulées (1), claires, d'un film de couverture, notamment d'un film sombre absorbant la chaleur.

8. Procédé selon l'une des revendications 1 à 7,
**caractérisé en ce qu'**
en même temps que la transformation dans l'outil de transformation (2, 3), on emboutit les accès pour les conducteurs électriques ou les liaisons mécaniques dans la pièce moulée (1).

9. Pièce de véhicule automobile réalisée selon un procédé de l'une quelconque des revendications 1 à 8, pour servir d'habillage intérieur de véhicules automobiles.

10. Pièce de véhicule automobile selon, la revendication 9,
**caractérisée en ce que**
dans les cavités réalisées par la transformation, on introduit des composants sous la forme de commutateurs, de feux d'éclairage et autres pièces fonctionnelles, à niveau, en creux, ou en relief par rapport à la surface de la pièce.
